# EUROPEAN PATENT APPLICATION

(11) **EP 3 502 640 A1**
(43) Date of publication of application: **26.06.2019**
(21) Application number: 18206827.0
(22) Date of filing: 16.11.2018
(51) Int. Cl.: G01K 17/00, G01N 25/48

(54) **SAMPLE HOLDER FOR ACCURATE TEMPERATURE CONTROL**

(30) Priority: 21.12.2017 EP 17209593
(71) Applicant: Ecole Polytechnique Federale De Lausanne (EPFL) EPFL-TTO, 1015 Lausanne (CH)
(72) Inventor: GALLANDAT, Noris, 1950 Sion (CH); ZÜTTEL, Andreas, 1950 Sion (CH)
(74) Representative: KATZAROV S.A.

(57) **Abstract**

The present relates to a sample holder comprising a single block (1) made of a thermally conductive material comprising at least two volumes, a reference volume (5) and a sample holding volume (4) directly machined in said single block (1), a heating means (3) and a temperature detector (2), wherein the heating means (3) is preferably embedded in the single block (1) such that the distance between the sample holding volume (4) and the heating means (3) is the same in a heat conductivity sense as the distance between the reference volume (5) and the heating means (3) and the distance between the thermocouple (2) and the heating means (3).

## Description

### Technical Field

The present invention relates to sample holding device and more particularly, to a device adapted to hold some component while accurately controlling its temperature.

### Background of the art

When measuring chemical / thermodynamic / kinetic properties of samples such as catalysts, absorbers, alloys, liquids or other, an accurate temperature control and measurement is critical. Accurate temperature control means that the temperature in the sample and in other parts of the test setup including but not limited to reference volumes should stay in a small band around the desired set point or set trajectory, i.e. the error from the set temperature must remain small. Typically, the measurements required span over a wide range of temperatures - from liquid N₂ (77 °K) to temperatures up to 900 °K or more. Temperature can be controlled using electronic devices including sensors such as thermocouples and actuators such as heating devices. Furthermore, temperature control can also be facilitated by appropriate design of the test apparatus, e.g. using appropriately chosen materials with specific thermodynamic properties such as their thermal conductivity.

Today, measurements are performed using a sample holder in the shape of a tube that can be put either in an oven to measure from ambient temperature to high temperatures or in a liquid N₂ bath to perform measurements at constant 77 °K. In all current setups, there are different layers between the actual powder sample, the heating/cooling system and the measurement point, resulting in accumulated inaccuracies for the measurements.

For example, document WO2011156443 describes a sample holder made from a thin-walled cylinder having a flat bottom. The cylinder has a diameter large enough to hold the sample container. The adapter for the sample is bonded to the thin-walled cylinder and the thermocouple is placed at the flat bottom of the cylinder. Because of all the different layers this system lacks acceptable accuracy and lacks options for fluctuating the temperature.

Document WO 1999027407 relates to a sample placed inside a block of a highly thermally conducting material. The temperature of the block is controlled via some dry gas flowing around the sample block. The convective heat transfer between the gas used for temperature control and the solid block compromising the sample poses a difference for the temperature range in which it can be measured. The design is for microscopy samples and it is impossible that enough heat transfer can be generated for samples or larger weight and dimensions.

Document US 5446263 A relates to a sample's location relative to two different thermally controlled means which is changed in order to change the set temperature of the sample itself.

One of the main problems of the conventional holders is therefore that the temperature measurement is not accurate.

There is therefore a need for accurate temperature measurements in this type of device.

In this regard, a primary object of the invention is to solve the above-mentioned problems and more particularly to provide a sample holder providing an accurate sample temperature measurement as well as a device for accurately fluctuating the temperature.

### Summary of the invention

The above problems are solved by the present invention.

A first aspect of the invention is a sample holder comprising a single block made of a thermally conductive material comprising at least two volumes, a reference volume and a sample holding volume directly machined in said single block, a heating means and a temperature detector, wherein the heating means is preferably embedded in the single block such that the distance between the sample holding volume and the heating means is the same in a heat conductivity sense as the distance between the reference volume and the heating means and the distance between the thermocouple and the heating means. Thanks to this, the accuracy of the temperature measurement is enhanced.

Advantageously, the conductive material is aluminum or copper. In this manner, it permits to obtain a thermal gradient between the measurement point and the actual sample which is negligible, resulting in an even higher temperature measurement accuracy even if the distance is not exactly the same between the sample holding volume and the heating cartridge and the thermocouple and the heating cartridge.

Preferably, the heating means is a heating cartridge. Thus, it can be easily controlled.

According to a preferred embodiment of the present invention, the temperature detector is a thermocouple or a resistance thermometer detector (RTD). This embodiment is particularly adapted for accurately measuring the temperature.

Preferably, the reference volume is adapted to receive a sample for measurement. In this manner, two measurements can be carried out simultaneously.

According to a preferred embodiment of the present invention, the sample holder sealingly embeds the temperature detector, the heating means and the sample holding volume. This embodiment is particularly adapted for providing a uniform temperature within the holder.

Advantageously, the ample holder further comprises a gas valve and a gas inlet. Thus, a uniform temperature can be provided within the sample/reference volumes.

A second aspect of the invention is a sample holding kit comprising the sample holder according to the first aspect and a cooling environment adapted to house said sample holder. The particular advantages of this device of the invention being similar to the ones of the method of the first aspect of the invention, they will not be repeated here.

According to a preferred embodiment of the present invention, the cooling environment is a liquid Nitrogen bath. This embodiment is particularly adapted for providing a large spectrum of temperature to the holder.

Advantageously, the heating means is adapted to be controlled so as to provide a temperature ranging from 77°K to 900°K within at least the sample holding volume. In this manner, one can easily control the temperature and make it fluctuate.

### Brief description of the drawings

Further particular advantages and features of the invention will become more apparent from the following non-limitative description of at least one embodiment of the invention which will refer to the accompanying drawings, wherein
- Figure 1 represent perspective view of the first aspect of the invention,
- Figure 2 represents a cross section view of the first aspect of the invention,

### Detailed description of the invention

The present detailed description is intended to illustrate the invention in a non-limitative manner since any feature of an embodiment may be combined with any other feature of a different embodiment in an advantageous manner.

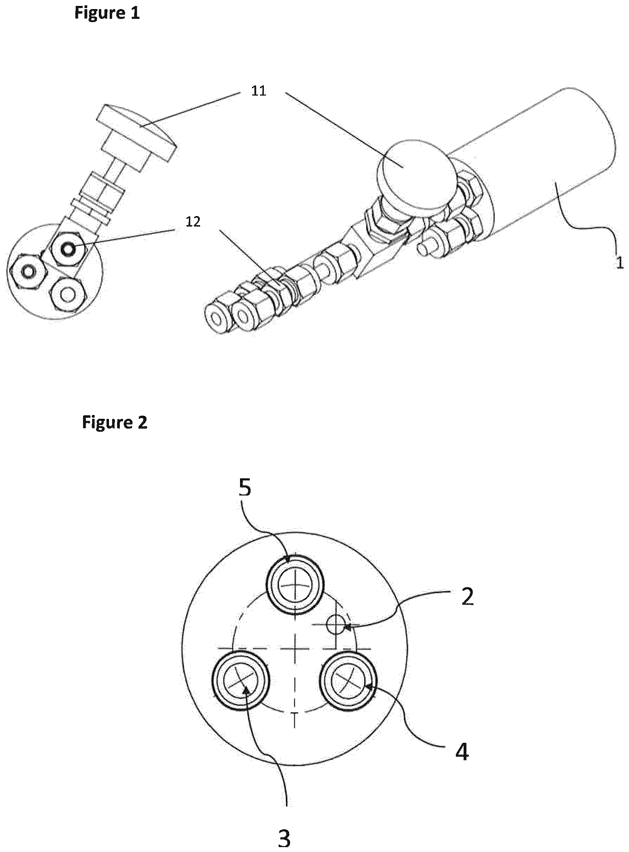

Figure 1 shows a perspective view of the first aspect of the invention which is a sample holder, also called sample holding device, basically made of a single block 1 preferably made of thermally conductive material such as aluminum or copper block, for example. Also represented are a valve 11 and a gas inlet 12 for passing a gas, such as an inert gas, through the sample during the measurements of its chemical / thermodynamic / kinetic properties.

As represented in figure 2, the single aluminum block 1 preferably comprises at least two volumes 4, 5 which are directly machined in it. These volumes typically ranges 0.5 to 10 cm³ and are preferably identical in order to provide the same heating characteristic. These two volumes are a sample holding volume 4 which is adapted to store the sample for measurement, and a reference volume.

This configuration permits to seal the held sample within the sample holder, and more particularly within the sample holding volume of the single block. Further, the reference volume is a volume which is intended to be preferably kept empty during the measurements to calculate the effect of the inner space of the volume and then be able to correct the sample measured value with this empty calibration value. However, once calibration has been made, the so called reference volume can be used as a sample holding volume as well. This would permit to run two measurements simultaneously.

Furthermore, the single block comprises a heating means 3, such as a heating cartridge 3 working in the range of 50 to 500 W, as well as a temperature detector 2, such as a thermocouple or a resistance thermometer detector (RTD)., both being embedded within the single block 1. With this configuration, we can obtain a single block 1 sealingly embedding a sensor 2, a heating means 3 and the material of which the chemical / thermodynamic / kinetic properties shall be measured.

As represented in figure 2, the heating cartridge 3 is preferably embedded in the block 1 such that the distance between the sample holding volume 4 and the heating cartridge 3 is the same in a heat conductivity sense as the distance between the reference volume 5 and the heating cartridge 3. Thanks to this, the accuracy of the calibration process is enhanced.

Also, the heating cartridge 3, the thermocouple 2 and the sample holding volume 4 are preferably designed such that the distance between the sample holding volume 4 and the heating cartridge 3 is the same in a heat conductivity sense as the distance between the thermocouple 2 and the heating cartridge 3. Thanks to this, the accuracy of the temperature measurement is enhanced.

Moreover, using a highly thermally conductive material such as aluminum or the like is important because it permits to obtain a small thermal gradient between the measurement point 2, i.e. the thermocouple, and the actual sample to be measured within the sample holding volume 4, which is negligible, resulting in an even higher temperature measurement accuracy even if the above mentioned distance is not exactly the same between the sample holding volume 4 and the heating cartridge 3 and the thermocouple 2 and the heating cartridge 3.

The invention also relates to a sample holding kit comprising the sample holder described above combined with a cooling vessel or environment, such as a liquid nitrogen bath, where the aluminum block can be submerged or immerged in liquid nitrogen. As the heating cartridge 3 is embedded in the aluminum block, it is possible to carry out measurements at intermediate temperatures, i.e. in the full range from 77°K up to 900°K through control of the heating cartridge and even to fluctuate the temperature to improve the measurements options.

Said sample holder can be used when measuring chemical / thermodynamic / kinetic properties of samples. These samples include but are not limited to catalysts, absorbers, alloys, liquids or any material or combination of materials where an accurate temperature control and measurement is critical. Inclusions in the above to be mentioned specifically are: measurement of metallic absorbers of gases or liquids and measurement of metallic alloys absorbing gases or liquids

While the embodiments have been described in conjunction with a number of embodiments, it is evident that many alternatives, modifications and variations would be or are apparent to those of ordinary skill in the applicable arts. Accordingly, this disclosure is intended to embrace all such alternatives, modifications, equivalents and variations that are within the scope of this disclosure. This for example is particularly the case regarding the exact number of heating means, temperature sensor, sample volumes, etc. Also, the type of N2 vessel may of course vary and all the different apparatuses which can be used in conjunction with the present invention are within the scope of the present invention when used in combination with the present invention.

## Claims

1. Sample holder comprising a single block (1) made of a thermally conductive material comprising at least two volumes, a reference volume (5) and a sample holding volume (4) directly machined in said single block (1), a heating means (3) and a temperature detector (2), wherein the heating means (3) is preferably embedded in the single block (1) such that the distance between the sample holding volume (4) and the heating means (3) is the same in a heat conductivity sense as the distance between the reference volume (5) and the heating means (3) and the distance between the thermocouple (2) and the heating means (3).

2. Sample holder according to claim 1, **characterized in that** the conductive material is aluminum or copper.

3. Sample holder to claim 1 or 2, **characterized in that** the heating means (3) is a heating cartridge.

4. Sample holder according to any one of claims 1 to 3, **characterized in that** the temperature detector (2) is a thermocouple or a resistance thermometer detector (RTD).

5. Sample holder according to any one of claims 1 to 4, **characterized in that** the reference volume (5) is adapted to receive a sample for measurement.

6. Sample holder according to any one of claims 1 to 5, **characterized in that** it sealingly embeds the temperature detector (2), the heating means (3) and the sample holding volume (4).

7. Sample holder according to any one of claims 1 to 6, **characterized in that** it further comprises a gas valve (11) and a gas inlet (12).

8. Sample holding kit comprising the sample holder according to any one of claims 1 to 7 and a cooling environment adapted to house said sample holder.

9. Sample holding kit according to claim 8, **characterized in that** the cooling environment is a liquid Nitrogen bath.

10. Sample holding kit according to claim 8 to 9, **characterized in that** the heating means (3) is adapted to be controlled so as to provide a temperature ranging from 77°K to 900°K within at least the sample holding volume (4).
